# EUROPÄISCHE PATENTSCHRIFT

(11) **EP 3 140 525 B1**
(45) Veröffentlichungstag und Bekanntmachung des Hinweises auf die Patenterteilung: **06.06.2018**
(21) Anmeldenummer: 15712559.2
(22) Anmeldetag: 18.03.2015
(51) Int. Cl.: F01N 13/08, F01N 13/18, F01N 13/20, F16L 9/02

(54) **ABGASANLAGE MIT EINER ENDROHRBLENDE**
EXHAUST SYSTEM WITH A FINISHER
SYSTÈME D'ÉCHAPPEMENT AVEC UN EMBOUT

(30) Priorität: 09.05.2014 DE 102014208722
(43) Veröffentlichungstag der Anmeldung: 15.03.2017
(73) Patentinhaber: Bayerische Motoren Werke Aktiengesellschaft, 80809 München (DE)
(72) Erfinder: HABERSTOCK, Martin, 85399 Hallbergmoos (DE); SCHWARZ, Wolfgang, 93176 Beratzhausen (DE)
(86) Internationale Anmeldenummer: PCT/EP2015/055600
(87) Internationale Veröffentlichungsnummer: WO 2015/169494

(56) Entgegenhaltungen:
- CN-U- 202 402 119
- DE-A1- 10 233 498
- DE-A1-102012 008 243
- DE-U1- 7 838 091
- JP-A- 2005 002 891
- JP-A- 2008 190 370
- JP-A- 2010 133 378
- JP-U- S5 594 421
- JP-U- S5 932 118
- US-A1- 2010 212 767

## Beschreibung

Die Erfindung betrifft eine Abgasanlage eines Kraftfahrzeugs gemäß dem Oberbegriff des Anspruchs 1.

Abgasanlagen für Kraftfahrzeuge, bei denen eine Endrohrblende für das Endrohr der Abgasanlage vorgesehen ist, sind bereits allgemein aus dem Stand der Technik bekannt.

Da die Endrohrblende häufig vom Fahrzeughalter als individuelles Zier- oder Tuning-Teil nachgerüstet wird, sind ein konstruktiv einfacher Aufbau der Endrohrblende sowie eine einfache Montage erstrebenswert. So sind inzwischen alternativ zum Verschweißen der Endrohrblende mit dem Endrohr der Abgasanlage auch Ausführungsformen üblich, bei denen die Endrohrblende auf das Endrohr der Abgasanlage aufgesteckt und mittels einer Klemmverbindung am Endrohr fixiert ist.

Insbesondere bei abgeschrägtem Rohrende des Blendenrohrs ist es außerdem notwendig, eine gewünschte Positionierung der Endrohrblende relativ zum Endrohr in Umfangsrichtung festzulegen. Gemäß dem Stand der Technik ist hierzu im Blendenrohr beispielsweise ein axialer Schlitz vorgesehen, in den ein am Endrohr vorgesehener, radial abstehender Positionierstift eingreift.

Eine gattungsgemäße Endrohrblende ist aus der DE 102 33 498 A bekannt.

Die JP 2005 002891 A zeigt eine Endrohrblende mit einem Blendenrohr, auf dessen Innenseite mehrere Halterungen angeschweißt sind, mittels denen eine Presspassung zwischen dem Blendenrohr und einem Endrohr der Abgasanlage erreicht wird.

Die JP S 55 094421 U1 offenbart eine Endrohrblende, die über eine Presspassung zwischen einem Rohrabschnitt der Endrohrblende und einem Endrohr der Abgasanlage festgelegt und zusätzlich verschweißt wird.

Aus der CN 202402119 U ist eine Endrohrblende bekannt, die über mehrere auf ihrer Innenseite angeordnete Befestigungselemente, die jeweils einen Klemmabschnitt und einen Krallenabschnitt aufweisen, an einem Endrohr fixiert wird.

Aufgabe der vorliegenden Erfindung ist die Schaffung einer Endrohrblende für eine Abgasanlage eines Kraftfahrzeugs, die konstruktiv einfach aufgebaut ist und sich mit geringem Aufwand zuverlässig, montagefreundlich und optisch vorteilhaft am Endrohr befestigen lässt.

Diese Aufgabe wird erfindungsgemäß gelöst durch eine Abgasanlage eines Kraftfahrzeugs, mit einem Endrohr, das einen im Wesentlichen zylindrischen Rohrendabschnitt mit einem freien Rohrende aufweist, und einer Endrohrblende mit einem Blendenrohr, das eine Rohrachse aufweist und auf das Endrohr der Abgasanlage aufgesteckt werden kann, mehreren auf einer radialen Innenseite des Blendenrohrs angeordneten Befestigungselementen zum Fixieren der Endrohrblende am Endrohr in Radialrichtung und Axialrichtung, sowie einem auf einer radialen Innenseite des Blendenrohrs angeordneten Positionierungselement zum Positionieren der Endrohrblende relativ zum Endrohr in Umfangsrichtung. Dabei ist die Endrohrblende auf das freie Rohrende des Endrohrs aufgesteckt, und die Befestigungselemente der Endrohrblende sind radial gegen das Endrohr beaufschlagt und stützen sich radial an einer Außenseite des Endrohrs ab. Zudem weist der Rohrendabschnitt des Endrohrs einen radialen Endrohrvorsprung auf, der in eine Aussparung des Positionierungselements der Endrohrblende eingreift, und das Positionierungselement bildet in einer Endmontageposition der Endrohrblende einen axialen Anschlag für den Endrohrvorsprung. Damit findet sowohl die Fixierung als auch die Positionierung der Endrohrblende geschützt im Inneren des Blendenrohrs statt. Dies ist sowohl optisch als auch montagetechnisch vorteilhaft, da nach einer Montage der Endrohrblende von außen keinerlei Befestigungs- oder Positionierhilfen zu sehen sind und bei der Montage für den Monteur keinerlei Gefahr besteht, sich beim Umgreifen und Aufstecken der Endrohrblende die Finger zwischen ineinandergreifenden, relativ zueinander bewegbaren Teilen einzuklemmen. Die Abgasanlage ermöglicht somit bei minimalem konstruktivem Aufwand eine exakte Positionierung der Endrohrblende in Umfangsrichtung sowie eine einfache und zuverlässige Befestigung der Endrohrblende am Endrohr in Radial- und Axialrichtung. Durch die Ausbildung des Positionierungselements als axialer Anschlag lässt sich auch eine axiale Endmontageposition der Endrohrblende relativ zum Endrohr einfach und zuverlässig festlegen.

Vorzugsweise ist das Blendenrohr im Wesentlichen schlitz- und bohrungsfrei ausgebildet. Das Blendenrohr lässt sich folglich durch einfaches Zuschneiden eines Ausgangsrohrs mit minimalem Aufwand herstellen. Außerdem erweist sich eine schlitz- und bohrungsfreie Ausführung optisch und montagetechnisch besonders vorteilhaft.

Die Befestigungselemente können beispielsweise radial elastische Befestigungsklemmen und/oder Befestigungskrallen sein. Auf diese Weise lässt sich die Endrohrblende mit minimalem Aufwand radial und axial am Endrohr fixieren.

Die Aussparung des Positionierungselements erstreckt sich bevorzugt in axialer Richtung und bildet eine Axialführung. Durch diese Axialführung der Endrohrblende relativ zum Endrohr wird eine unerwünschte Relativdrehung zwischen dem Blendenrohr und dem Endrohr beim axialen Aufstecken der Endrohrblende zuverlässig verhindert.

Die Aussparung des Positionierungselements kann hierbei in Axialrichtung gesehen eine veränderliche tangentiale Abmessung aufweisen, wobei sich die Aussparung in Axialrichtung gesehen insbesondere zumindest abschnittsweise tangential verjüngt. Dies erlaubt beim Aufstecken der Endrohrblende anfangs eine gewisse Toleranz beim Ausrichten der Endrohrblende relativ zum Endrohr in Umfangsrichtung.

Gemäß einer bevorzugten Ausführungsform der Abgasanlage bilden der Endrohrvorsprung und die Aussparung in einer Endmontageposition der Endrohrblende eine in Umfangsrichtung weitgehend spielfreie Formschlussverbindung aus. Dadurch ist mit geringem Aufwand sichergestellt, dass die Endrohrblende und das Endrohr in Umfangsrichtung eine gewünschte Position zuverlässig und exakt einnehmen sowie dauerhaft in dieser Position gehalten sind.

Die Aussparung ist hierbei vorzugsweise als Axialführung für den Endrohrvorsprung ausgebildet, sodass die Endrohrblende beim Aufstecken auf das Endrohr axial geführt ist und folglich keine unerwünschte Relativdrehung zwischen dem Blendenrohr und dem Endrohr auftritt.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figur 1 zwei perspektivische Ansichten eines Endrohrs einer aus dem Stand der Technik bekannten Abgasanlage vor und nach der Montage einer herkömmlichen Endrohrblende;
- Figur 2 zwei perspektivische Ansichten eines Endrohrs einer erfindungsgemäßen Abgasanlage vor und nach der Montage einer Endrohrblende;
- Figur 3 einen Längsschnitt durch die Endrohrblende gemäß Figur 2; und
- Figur 4 einen weiteren Längsschnitt durch die Endrohrblende gemäß Figur 2.

Zunächst wird darauf hingewiesen, dass Bauteile, die einander funktional entsprechen, im Rahmen dieser Anmeldung identische Bezugszeichen tragen, wobei die Bezugszeichen von aus dem Stand der Technik bekannten Bauteilen zusätzlich mit einem Apostroph versehen sind.

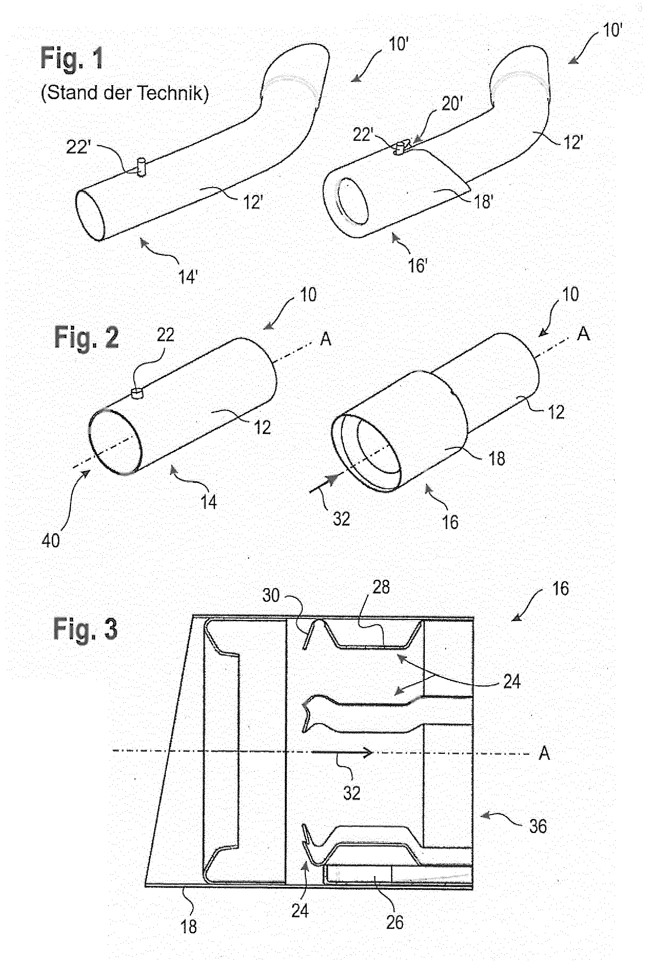

Die Figur 1 zeigt zwei perspektivische Ausschnitte einer herkömmlichen Abgasanlage 10' eines Kraftfahrzeugs im Bereich eines Endrohrs 12', konkret eines Rohrendabschnitts 14' des Endrohrs 12', wobei der Rohrendabschnitt 14' auf der linken Seite vor der Montage und auf der rechten Seite nach der Montage einer aus dem Stand der Technik bekannten Endrohrblende 16' dargestellt ist.

Die Endrohrblende 16' weist ein Blendenrohr 18' auf, welches axial auf den Rohrendabschnitt 14' aufgesteckt ist. Zur Positionierung der Endrohrblende 16' relativ zum Endrohr 12' in Umfangsrichtung weist das Blendenrohr 18' einen axialen Schlitz 20' und der Rohrendabschnitt 14' einen radialen Endrohrvorsprung 22' auf, welcher in einer Endmontageposition der Endrohrblende 16' gemäß Figur 1 (rechte Seite) in den Schlitz 20' des Blendenrohrs 18' eingreift.

Der Schlitz 20' und der Endrohrvorsprung 22' dienen als Positionierhilfe zum Positionieren der Endrohrblende 16' relativ zum Endrohr 12' in Umfangsrichtung. Die Positionierhilfe ist in diesem Fall von außen sichtbar, was bei einem Zier- oder Tuning-Element wie der Endrohrblende 16' bereits aus optischen Gründen generell unerwünscht ist. Darüber hinaus besteht bei der Montage der Endrohrblende 16' für den Monteur die Gefahr, sich beim Umgreifen und Aufstecken des Blendenrohrs 18' die Finger zwischen dem radialen Endrohrvorsprung 22' und dem Schlitz 20' einzuklemmen.

Die Figur 2 zeigt zwei perspektivische Ausschnitte einer erfindungsgemäßen Abgasanlage 10 eines Kraftfahrzeugs im Bereich eines Endrohrs 12, wobei auf der linken Seite ein Rohrendabschnitt 14 des Endrohrs 12 vor der Montage und auf der rechten Seite der Rohrendabschnitt 14 nach der Montage einer erfindungsgemäßen Endrohrblende 16 zu sehen ist.

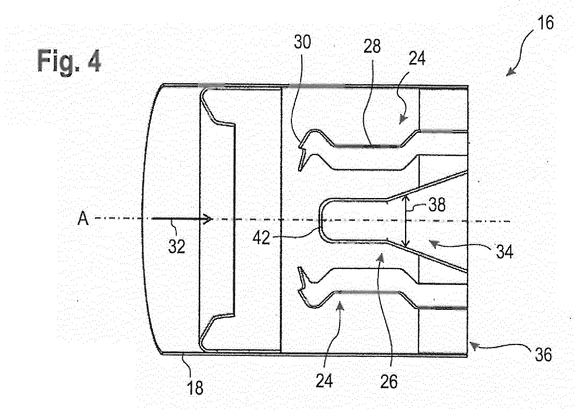

Um den konstruktiven Aufbau der Endrohrblende 16 gemäß Figur 2 besser erkennen zu können, ist in den Figuren 3 und 4 jeweils ein Längsschnitt dieser Endrohrblende 16 dargestellt.

Die Endrohrblende 16 für die Abgasanlage 10 eines Kraftfahrzeugs umfasst gemäß den Figuren 3 und 4 ein im Wesentlichen kreiszylindrisches Blendenrohr 18, das eine Rohrachse A aufweist und auf das Endrohr 12 der Abgasanlage 10 gemäß Figur 2 aufgesteckt werden kann, mehrere auf einer radialen Innenseite des Blendenrohrs 18 angeordnete Befestigungselemente 24 zum Fixieren der Endrohrblende 16 am Endrohr 12 in Radialrichtung und Axialrichtung, sowie ein auf einer radialen Innenseite des Blendenrohrs 18 angeordnetes Positionierungselement 26 zum Positionieren der Endrohrblende 16 relativ zum Endrohr 12 in Umfangsrichtung.

Das Blendenrohr 18 ist dabei im Wesentlichen schlitz- und bohrungsfrei ausgebildet, sodass auf einer radialen Außenseite des Blendenrohrs 18 keinerlei Positionierhilfen vorhanden sind, welche die Montagefreundlichkeit und Optik der Endrohrblende 16 beeinträchtigen würden. Die Befestigungselemente 24 sowie das Positionierungselement 26 sind bevorzugt umgeformte Stanzteile aus Blech, die dauerhaft an einer radialen Innenseite des Blendenrohrs 18 befestigt sind, beispielsweise durch eine Schweißverbindung.

Die Befestigungselemente 24 umfassen mehrere in Umfangsrichtung gleichmäßig verteilte, radial elastische Befestigungsklemmen und/oder Befestigungskrallen, wobei jedes Befestigungselement 24 im vorliegenden Ausführungsbeispiel sowohl einen radial elastischen Klemmabschnitt 28 als auch einen radial elastischen Krallenabschnitt 30 aufweist. Der Klemmabschnitt 28 sorgt dabei hauptsächlich für die radiale Klemmkraft zwischen dem Endrohr 12 und dem Blendenrohr 18, während der Krallenabschnitt 30 eine axiale Bewegung der Endrohrblende 16 relativ zum Endrohr 12 in Montagerichtung 32 mit geringem Montagewiderstand zulässt, jedoch einer axial entgegengesetzten Bewegung in Demontagerichtung einen deutlich höheren Demontagewiderstand entgegensetzt. Somit lässt sich die Endrohrblende 16 bei der Montage vergleichsweise einfach auf das Endrohr 12 aufstecken und ist nach der Montage dennoch sicher und zuverlässig mit dem Endrohr 12 verbunden.

In Figur 4 ist gut zu erkennen, dass das Positionierungselement 26 eine nutförmige Aussparung 34 aufweist, die sich ausgehend von einem Rohrende 36 des Blendenrohrs 18 in axialer Richtung erstreckt und eine Axialführung für einen am Endrohr 12 vorgesehenen radialen Endrohrvorsprung 22 (vgl. Figur 2, links) bildet.

Die Aussparung 34 des Positionierungselements 26 weist in Axialrichtung gesehen eine veränderliche tangentiale Abmessung 38 auf, wobei sich die Aussparung 34 gemäß Figur 4 ausgehend vom Rohrende 36 in Axialrichtung zumindest abschnittsweise tangential verjüngt. Dies erlaubt zu Beginn des Montagevorgangs eine gewisse Toleranz bei der Positionierung der Endrohrblende 16 relativ zum Endrohr 12 in Umfangsrichtung.

Gemäß Figur 2 umfasst die Abgasanlage 10 das Endrohr 12, welches einen im Wesentlichen kreiszylindrischen Rohrendabschnitt 14 mit einem freien Rohrende 40 aufweist, sowie die oben beschriebene Endrohrblende 16, welche mit dem Rohrende 36 voran auf das freie Rohrende 40 des Endrohrs 12 aufgesteckt ist und den Rohrendabschnitt 14 umschließt. Die Befestigungselemente 24 der Endrohrblende 16 sind dabei radial gegen das Endrohr 12 beaufschlagt und stützen sich radial an einer Außenseite des Endrohrs 12 ab.

Am Rohrendabschnitt 14 des Endrohrs 12 ist der radiale Endrohrvorsprung 22 vorgesehen, der radial nach außen vorsteht und in die Aussparung 34 des Positionierungselements 26 der Endrohrblende 16 eingreift. Dabei bilden der Endrohrvorsprung 22 und die Aussparung 34 in einer Endmontageposition der Endrohrblende 16 (Figur 2, rechts) eine in Umfangsrichtung weitgehend spielfreie Formschlussverbindung aus. Beispielsweise ist der Endrohrvorsprung 22 ein an die radiale Außenseite des Endrohrs 12 angeschweißter Metallstift.

Gemäß Figur 4 ist die Aussparung 34 insbesondere als Axialführung für den Endrohrvorsprung 22 ausgebildet, sodass die Endrohrblende 16 beim Aufstecken auf das Endrohr 12 axial geführt ist.

Optional ist die Aussparung 34 des Positionierungselements 26 durch eine axiale Stirnwand 42 begrenzt, sodass das Positionierungselement 26 einen axialen Anschlag für den Endrohrvorsprung 22 bildet und auf diese Weise die Endmontageposition der Endrohrblende 16 (Figur 2, rechts) definiert.

## Patentansprüche

1. Abgasanlage eines Kraftfahrzeugs, mit
einem Endrohr (12), das einen im Wesentlichen zylindrischen Rohrendabschnitt (14) mit einem freien Rohrende (40) aufweist, und
einer Endrohrblende (16) mit einem Blendenrohr (18), das eine Rohrachse (A) aufweist und auf das Endrohr (12) der Abgasanlage (10) aufgesteckt werden kann, mehreren auf einer radialen Innenseite des Blendenrohrs (18) angeordneten Befestigungselementen (24) zum Fixieren der Endrohrblende (16) am Endrohr (12) in Radialrichtung und Axialrichtung, sowie einem auf einer radialen Innenseite des Blendenrohrs (18) angeordneten Positionierungselement (26) zum Positionieren der Endrohrblende (16) relativ zum Endrohr (12) in Umfangsrichtung,
wobei die Endrohrblende (16) auf das freie Rohrende (40) des Endrohrs (12) aufgesteckt ist, und
wobei die Befestigungselemente (24) der Endrohrblende (16) radial gegen das Endrohr (12) beaufschlagt sind und sich radial an einer Außenseite des Endrohrs (12) abstützen,
**dadurch gekennzeichnet, dass** der Rohrendabschnitt (14) des Endrohrs (12) einen radialen Endrohrvorsprung (22) aufweist, der in eine Aussparung (34) des Positionierungselements (26) der Endrohrblende (16) eingreift,
und dass das Positionierungselement (26) in einer Endmontageposition der Endrohrblende (16) einen axialen Anschlag für den Endrohrvorsprung (22) bildet.

2. Abgasanlage nach Anspruch 1, **dadurch gekennzeichnet, dass** das Blendenrohr (18) schlitz- und bohrungsfrei ausgebildet ist.

3. Abgasanlage nach einem der vorhergehenden Ansprüche, **dadurch gekennzeichnet, dass** die Befestigungselemente (24) radial elastische Befestigungsklemmen und/oder Befestigungskrallen sind.

4. Abgasanlage nach einem der vorhergehenden Ansprüche, **dadurch gekennzeichnet, dass** die Aussparung (34) des Positionierungselements (26) sich in axialer Richtung erstreckt und eine Axialführung bildet.

5. Abgasanlage nach Anspruch 4, **dadurch gekennzeichnet, dass** die Aussparung (34) des Positionierungselements (26) in Axialrichtung gesehen eine veränderliche tangentiale Abmessung aufweist.

6. Abgasanlage nach einem der vorhergehenden Ansprüche, **dadurch gekennzeichnet, dass** der Endrohrvorsprung (22) und die Aussparung (34) in einer Endmontageposition der Endrohrblende (16) eine in Umfangsrichtung spielfreie Formschlussverbindung ausbilden.

7. Abgasanlage nach einem der vorhergehenden Ansprüche, **dadurch gekennzeichnet, dass** die Aussparung (34) als Axialführung für den Endrohrvorsprung (22) ausgebildet ist, sodass die Endrohrblende (16) beim Aufstecken auf das Endrohr (12) axial geführt ist.

## Claims

1. An exhaust system of a motor vehicle, with
a tailpipe (12) which has a substantially cylindrical pipe end portion (14) with a free pipe end (40), and
a tailpipe trim (16) with a trim pipe (18) which has a pipe axis (A) and can be fitted onto the tailpipe (12) of the exhaust system (10), a plurality of fastening elements (24) arranged on a radial inner side of the trim pipe (18) for fixing the tailpipe trim (16) to the tailpipe (12) in the radial direction and axial direction, and also a positioning element (26) arranged on a radial inner side of the trim pipe (18) for positioning the tailpipe trim (16) relative to the tailpipe (12) in the peripheral direction,
wherein the tailpipe trim (16) is fitted onto the free pipe end (40) of the tailpipe (12), and
wherein the fastening elements (24) of the tailpipe trim (16) are urged radially against the tailpipe (12) and are supported radially on an outer side of the tailpipe (12),
**characterised in that** the pipe end portion (14) of the tailpipe (12) has a radial tailpipe projection (22) which engages in a cutout (34) in the positioning element (26) of the tailpipe trim (16),
and **in that** the positioning element (26) in a final mounting position of the tailpipe trim (16) forms an axial stop for the tailpipe projection (22).

2. An exhaust system according to Claim 1, **characterised in that** the trim pipe (18) is designed free from slots and bores.

3. An exhaust system according to one of the preceding claims, **characterised in that** the fastening elements (24) are radially elastic fastening clamps and/or fastening claws.

4. An exhaust system according to one of the preceding claims, **characterised in that** the cutout (34) of the positioning element (26) extends in the axial direction and forms an axial guide.

5. An exhaust system according to Claim 4, **characterised in that** the cutout (34) of the positioning element (26), viewed in the axial direction, has a changeable tangential dimension.

6. An exhaust system according to one of the preceding claims, **characterised in that** the tailpipe projection (22) and the cutout (34) in a final mounting position of the tailpipe trim (16) form a positive connection which is free from play in the peripheral direction.

7. An exhaust system according to one of the preceding claims, **characterised in that** the cutout (34) is designed as an axial guide for the tailpipe projection (22), so that the tailpipe trim (16) is axially guided when being fitted onto the tailpipe (12).

## Revendications

1. Installation de gaz d'échappement d'un véhicule comprenant :
un embout (12) qui comporte un segment essentiellement cylindrique (14) ayant une extrémité libre (40), et
un obturateur d'embout (16) comprenant un tube d'obturateur (18) ayant un axe (A), et, pouvant être enfiché sur l'embout (12) de l'installation de gaz d'échappement (10),
plusieurs éléments de fixation (24) montés sur la face interne radiale du tube d'obturateur (18) pour permettre de fixer l'obturateur (16) sur l'embout (12) en direction radiale et en direction axiale, ainsi qu'un élément de positionnement (26) monté sur la face interne radiale du tube d'obturateur (18) pour permettre de positionner l'obturateur (16) par rapport à l'embout (12) en direction périphérique,
l'obturateur (16) étant enfiché sur l'extrémité libre (40) de l'embout (12), et
les éléments de fixation (24) de l'obturateur (16) étant rappelés radialement contre l'embout (12) et s'appuyant radialement sur la face externe de cet embout (12),
**caractérisé en ce que**
le segment tubulaire (14) de l'embout (12) comporte une saillie radiale (22) qui vient en prise dans un évidement (34) de l'élément de positionnement (26) de l'obturateur (16), et
l'élément de positionnement (26) forme, dans sa position de montage finale de l'obturateur (16) une butée axiale pour la saillie (22) de l'embout.

2. Installation de gaz d'échappement conforme à la revendication 1,
**caractérisée en ce que**
le tube d'obturateur (18) est exempt de fentes et de perçages.

3. Installation de gaz d'échappement conforme à l'une des revendications précédentes,
**caractérisée en ce que**
les éléments de fixation (24) sont constitués par des pinces de fixation élastique et/ou des griffes de fixation élastiques.

4. Installation de gaz d'échappement conforme à l'une des revendications précédentes,
**caractérisée en ce que**
l'évidement (34) de l'élément de positionnement (26) s'étend en direction axiale et forme un guidage axial.

5. Installation de gaz d'échappement conforme à la revendication 4,
**caractérisée en ce que**
l'évidement (34) de l'élément de positionnement (26) a des dimensions tangentielles variables dans la direction axiale.

6. Installation de gaz d'échappement conforme à l'une des revendications précédentes,
**caractérisée en ce que**
la saillie (22) de l'embout et l'évidement (34) forment, dans la position de montage finale de l'obturateur (16), une liaison par la forme exempte de jeu dans la direction périphérique.

7. Installation de gaz d'échappement conforme à l'une des revendications précédentes,
**caractérisée en ce que**
l'évidement (34) est réalisé sous la forme d'un guidage axial de la saillie (22) de l'embout de sorte que l'obturateur (16) soit guidé axialement lors de son enfichage sur l'embout (12).
